Europäisches Patentamt

European Patent Office

Office européen des brevets

(19)

(11) Veröffentlichungsnummer: **0 284 852 B1**

(12) **EUROPÄISCHE PATENTSCHRIFT**

(45) Veröffentlichungstag der Patentschrift: **07.08.91**

(21) Anmeldenummer: **88103753.5**

(22) Anmeldetag: **10.03.88**

(51) Int. Cl.⁵: **G01M 3/32, G01M 3/20**

54 Einrichtung zum Prüfen der Gasdichtigkeit von Hohlraumwänden.

(30) Priorität: **30.03.87 DE 3710443**

(43) Veröffentlichungstag der Anmeldung:
**05.10.88 Patentblatt 88/40**

(45) Bekanntmachung des Hinweises auf die
Patenterteilung:
**07.08.91 Patentblatt 91/32**

(84) Benannte Vertragsstaaten:
**AT FR GB IT NL**

(56) Entgegenhaltungen:
**DE-A- 2 101 702**
**FR-A- 657 732**
**FR-A- 2 319 891**

**PATENT ABSTRACTS OF JAPAN, Band 7, Nr.
274 (P-241)[1419], 7. Dezember 1983; & JP-
A-58 153 136 (TOKYO SHIBAURA DENKI K.K.)
12-09-1983**

**PATENT ABSTRACTS OF JAPAN, Band 7, Nr.
93 (P-192)[1238], 19. April 1983; & JP-A-58 21
134 (NIPPON KOKAN K.K.) 07-02-1983**

**SOVIET INVENTIONS ILLUSTRATED, Woche
8617, Offenlegung 9. Mai 1986, Derwent
Publ., London, GB; & SU-A-1 182 326 (UF A**

**ENGINE CONS PRD) 30-09-1985**

(73) Patentinhaber: **Weatherford Oil Tool GmbH
Hainhäuser Weg 150
W-3012 Langenhagen 1(DE)**

(72) Erfinder: **Jänsch, Manfred
Moorkamp 25
W-3008 Garbsen 5(DE)**

(74) Vertreter: **Arendt, Helmut, Dipl.-Ing.
Patentanwalt Bergiusstrasse 2 c
W-3000 Hannover 51(DE)**

## Beschreibung

Die Erfindung betrifft ein Verfahren zum gefahrlosen Prüfen der Gasdichtigkeit von geschlossene Hohlräume bildenden starren Wänden unter Verwendung von in die Hohlräume leitbarem Prüfgas von > 1000 bar und eines Meßgerätes zum Erfassen und Anzeigen von durch undichte Wandstellen austretendem Prüfgas.

Um Undichtigkeiten an Verbindungsstellen von Hohlkörpern, beispielsweise zwischen zwei Rohren, zu beseitigen ist es üblich, die Verbindungsstelle einer Leckprüfung zu unterwerfen. Dabei wird ein unter Druck stehendes Prüfmittel auf die Prüfstelle geleitet und der Druck überprüft. Ein Druckabfall zeigt eine Undichtigkeit an.
Nach einem weiteren Prüfverfahren ist es bekannt, ein Gas durch zwei miteinander verbundene Rohrstücke zu leiten. Dabei wird der Gasdruck mit Hilfe eines Absperrwerkzeugs von innen aufgebracht. Ein solches Verfahren und ein Werkzeug zur Durchführung des Verfahrens sind beispielsweise in der DE-OS 30 30 665 beschrieben. Sie zeigt zwei mit Abstand zueinander angeordnete ringförmige Dichtungen aus federnd nachgiebigem Material, die durch zwei Kolben, von denen jeder einer der Dichtungen zugeordnet ist, axial zusammenpreßbar sind. Dadurch wird erreicht, daß sich die Dichtungen an die inneren Rohrwandungen der miteinander verbundenen Rohrstücke legen und somit eine Prüfkammer bilden, in welche Prüfgas unter Druck, beispielsweise Helium, eingeleitet wird. An der Außenseite dieser Prüfkammer sind im Bereich der Prüfstellen Meßinstrumente angeschlossen, mit denen gegebenenfalls austretende Gasmengen angezeigt werden. Die bekannten Ausführungen haben den Nachteil, daß sie erhebliche Prüfmittelmengen für die Prüfverfahren benötigen. Das gasförmige Prüfmittel muß bei der Anwendung der bekannten Geräte in großen Mengen erzeugt und komprimiert werden. Große Gasmengen in Verbindung mit hohen Drücken schaffen jedoch erhebliche Gefahren nicht nur im Bereich des Prüfgerätes selbst, sondern schon am Erzeugergerät und an der von diesem zum Prüfgerät führenden Zuleitung. Außerdem ist ein Prüfgerät dieser Art nur für Rohre, d. h. langgestreckte Hohlräume mit glatten durchgehenden Wänden geeignet. Hohlräume beliebiger Gestaltungen, beispielsweise tankförmige Behälter, können mit den bekannten Ausführungen keiner Dichtigkeitsprüfung unterzogen werden. Außerdem steigt die Gefährlichkeit des Prüfverfahrens mit Hilfe eines zu komprimierenden Gasprüfmittels mit der Größe der zu prüfenden Behälter ganz erheblich an, so daß die Prüfdrücke nur sehr klein gehalten werden können. Dadurch verliert das Prüfverfahren erheblich an Wert.
Die JP-A-58 153 136 zeigt einen sackförmigen flüssigkeitsdichten Behälter aus weichem Material, der in einem zu prüfenden Container angeordnet ist. Der flüssigkeitsdichte Innenbehälter reicht mit Einfüllstutzen aus dem zu prüfenden Hohlraum heraus. Zwischen dem Innenbehälter und den Containerwänden ist eine Gasmenge angeordnet und durch ein Ventil hermetisch abgeschlossen . Der Innenbehälter aus weichem Material dient dem Zweck, den Zutritt von Flüssigkeit in den defekten Bereich des Containers zu verhindern . Der Innenbehälter wird mit Wasser gefüllt und unter Prüfdruck gesetzt. Dieser Druck wird gleichmäßig über das zwischen den Behälterwänden befindliche Gasvolumen auf die Containerwände übertragen. Mit dieser Einrichtung ist es kaum möglich, ohne großen maschinellen Aufwand Flüssigkeitsdrücke von weitaus mehr als 1000 bar zu erreichen, die sich auf das vorhandene Gaspolster auswirken. Das vorhandene Gasvolumen stellt insbesondere bei großen Behältern ei ne noch zu große Gefahr für das Prüfpersonal dar.

Der Erfindung liegt die Aufgabe zu Grunde, ein Gerät nach dem eingangs genannten Gattungsbegriff so auszubilden, daß die Wandungen von Hohlräumen beliebiger Gestaltung, insbesondere mit großen Querschnitten gefahrlos mit Hilfe von Gasen wesentlich größerer Drücke geprüft werden können. Die Erfindung zur Lösung dieser Aufgabe ist durch folgende Verfahrensschritte gekennzeichnet:

a) Teilung eines zu prüfenden Hohlraums in einen geschlossenen inneren Füllraum mit elastischen Wänden und einen diesen umgebenden und nach außen durch die starren Wände des Hohlraumes begrenzten Prüfraum,

b) Füllen des Füllraumes mit einer im wesentlichen inkompressiblen Flüssigkeit mit geringem Fülldruck bis zur dichten Anlage der elastischen Wände an die starren Wände,

c) Einleiten von Prüfgas in den Prüfraum zwischen den elastischen und starren Wänden und Erhöhen des Gasdrucks innerhalb des Prüfgerätes bis zum Erreichen des gewünschten Prüfdrucks.

Durch die Verwendung sehr geringer gasförmiger Prüfmittelmengen ist die Sicherheit gegen Arbeitsunfälle ganz erheblich verbessert. Eine Zerstörung des Wandmaterials durch herstellungstechnisch bedingte Fehler kann nicht zu einer Gefährdung der Bedienungspersonen führen. Es besteht die Möglichkeit, die Höhe des Prüfdrucks wesentlich, d. h. weit über 1000 bar zu steigern, da die große Druckerhöhung. innerhalb des Prüfgerätes erzeugt werden kann und somit die Sicherheit auch im Bereich der separaten Energieerzeuger und deren Zuleitungen zum Prüfgerät erhöht wird. Da die Einrichtung mit wesentlich kleineren Energieerzeugern betrieben werden kann, ergibt sich eine weitere bzw. zusätzliche Verbesserung durch den wirtschaftlichen Vorteil, der mit dem geringen Verbrauch von Helium bzw. von Gemischen von Helium mit anderen Gasen verbunden ist.

Mit den Figuren der Zeichnung sind zwei Ausführungsbeispiele des Erfindungsgegenstandes schematisch dargestellt und nachstehend erläutert.

Es zeigen:

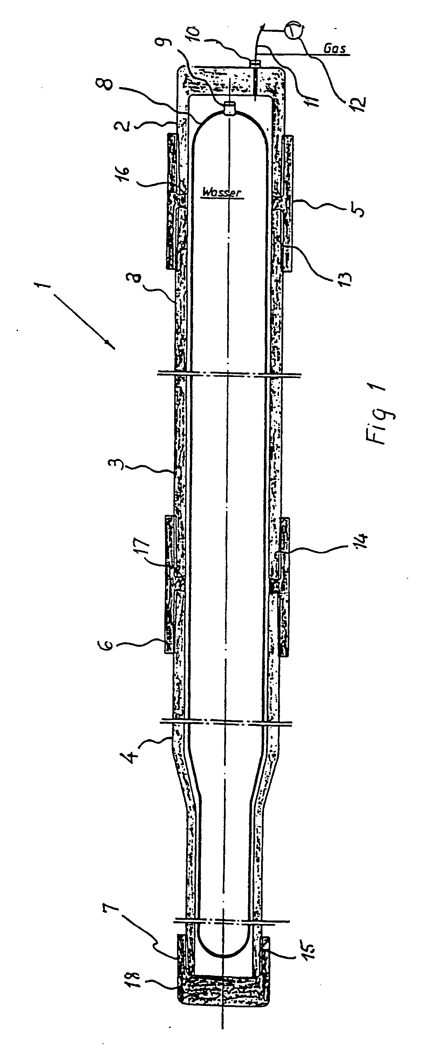

Fig. 1 eine Prüfeinrichtung an einem langgestreckten rohrförmigen Hohlkörper und

Fig. 2 den Einsatz der Einrichtung zum Prüfen der Dichtigkeit eines Tankbehälters.

Der zu prüfende rohrförmige Behälter 1 besteht aus mehreren Wandabschnitten 2, 3 und 4, die durch Schraubmuffen 5 und 6 miteinander verbunden sind. Das hintere Ende des Behälters ist mit einer Schraubkappe 7 verschlossen. In den Hohlraum des Körpers 1 ist ein aus flexiblem, elastischem Material bestehender schlauchförmiger Hohlkörper 8 eingelegt. Er trägt an einer Stirnseite ein Füll- und Entleerungsorgan 9 für einzufüllende inkompressible Druckmittel, beispielsweise Wasser. An einer Stirnseite des zu prüfenden Behälters ist ein weiteres Füll- und Entleerungsorgan 10 angeordnet, durch welches das Prüfgas, beispielsweise Helium, über eine Zuführleitung 11 eingeleitet werden kann. Der Druck des Prüfmittels kann mit Hilfe des Druckmessers 12 in der Gaszuführungsleitung überprüft werden.

Sobald genügend flüssiges Druckmittel in den Innenraum des flexiblen Hohlkörpers 8 gebracht ist, schmiegen sich dessen Wände dicht an die Innenflächen der Wandteile 2, 3 und 4 an. Zwischen den Hohlkörer 8 aus flexiblem Material und die Innenflächen des Behälters 1 kann nunmehr Prüfgas über das Füllorgan 10 eingeleitet werden, bis der Gasdruck eine hinreichende Höhe erreicht hat, um mit Sicherheit feststellen zu können, ob beispielsweise die ineinandergreifenden Schraubgewinde 13, 14 oder 15 an den Verschraubungsmuffen bzw. an der Schraubkappe gasdicht ineinandergreifen bzw. die ringförmigen Stirnflächen 16, 17 oder 18 der einzelnen Rohrabschnitte gasdicht an den Verschraubungselementen anliegen.

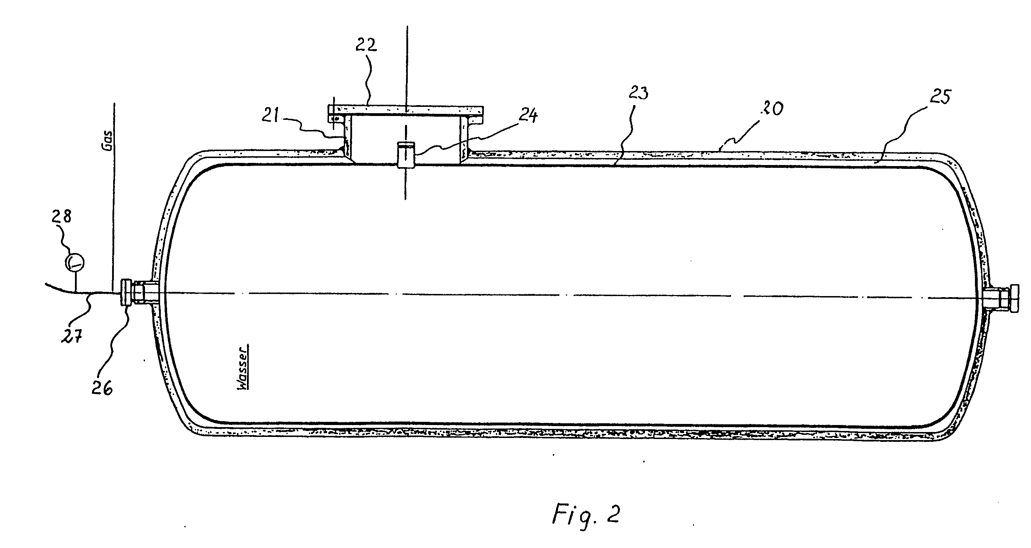

Das Ausführungsbeispiel gemäß Fig. 2 zeigt einen Behälter 20, in Form eines Tanks mit einem Dom 21 und einem Domdeckel 22. Im Innenraum des Tanks ist ein Hohlkörper 23 aus flexiblem Material angeordnet und über ein Einfüll- bzw. Entleerungsorgan 24 mit Wasser gefüllt, bis sich der flexible Hohlkörper an die Innenflächen des Tankmantels anlehnt.

In den Zwischenraum 25 zwischen dem flexiblen Hohlkörper und den zu prüfenden Tankwänden wird über ein Füll- und Entleerungsorgan 26 an einer Stirnseite des zu prüfenden Behälters Gas über eine Leitung 27 eingefüllt, bis ein Meßinstrument 28 den gewünschten hohen Prüfdruck anzeigt.

Da bei genügend hohem Wasserdruck der flexible Mantel des Hohlkörpers 23 fest an den Innenflächen des zu prüfenden Behälters zur Anlage gelangt, kann nur eine sehr geringe Menge Prüfgas mit hohem Druck in den spaltförmigen Trennraum 25 gepreßt werden. Die geringe Menge reicht einerseits aus, um eine undichte Stelle, beispielsweise an einer Schweißnaht, anzuzeigen, andererseits erwächst aus dieser geringen Menge für das Bedienungspersonal keine Gefahr für den Fall, daß der Behälter dem Druck nicht standhält.

**Patentansprüche**

1. Verfahren zum gefahrlosen Prüfen der Gasdichtigkeit von geschlossene Hohlräume bildenden starren Wänden unter Verwendung von in die Hohlräume leitbarem Prüfgas von > 1000 bar und eines Meßgerätes zum Erfassen und Anzeigen von durch undichte Wandstellen austretendem Prüfgas, gekennzeichnet durch folgende Verfahrensschritte:

a) Teilung eines zu prüfenden Hohlraumes in einen geschlossenen inneren Füllraum mit elastischen Wänden und einen diesen umgebenden und nach außen durch die starren Wände des Hohlraumes begrenzten Prüfraum,

b) Füllen des Füllraumes mit einer im wesentlichen inkompressiblen Flüssigkeit mit geringem Fülldruck bis zur dichten Anlage der elastischen Wände an die starren Wände,

c) Einleiten von Prüfgas in den Prüfraum zwischen den elastischen und starren Wänden und Erhöhen des Gasdrucks innerhalb des Prüfgerätes bis zum Erreichen des gewünschten Prüfdrucks.

2. Einrichtung zum gefahrlosen Prüfen der Gasdichtigkeit von geschlossene Hohlräume bildenden starren Wänden unter Verwendung von in die Hohlräume leitbarem Prüfgas von > 1000 bar und eines Meßgerätes (12) zum Erfassen und Anzeigen von durch undichte Wandstellen austretendem Prüfgas zum Durchführen des Verfahrens nach Anspruch 1 mit einem in den zu prüfenden Hohlraum einsetzbaren Hohlkörper (8,23) aus flexiblem, elastischem Material, der ein erstes verschließbares Füll- und Entleerungsorgan (9,24) zum Einfüllen und Ablassen eines inkompressiblen Druckmittels aufweist, und mit einem zweiten, in eine der Hohlraumwände einsetzbaren Füll- und Entleerungsorgan (10,26) zum Einleiten

Fig 1

*Fig. 2*

EP 0 284 852 B1